# EUROPÄISCHE PATENTSCHRIFT

(11) **EP 3 078 824 B1**
(45) Veröffentlichungstag und Bekanntmachung des Hinweises auf die Patenterteilung: **01.07.2020**
(21) Anmeldenummer: 16162625.4
(22) Anmeldetag: 29.03.2016
(51) Int. Cl.: F01N 5/02, B62D 37/02, F02G 5/02, F02B 37/16, F02B 37/20

(54) **BRENNKRAFTMASCHINE MIT ABGASENERGIENUTZUNG UND VERFAHREN ZUM BETRIEB EINER SOLCHEN BRENNKRAFTMASCHINE**
COMBUSTION ENGINE WITH EXHAUST GAS ENERGY RECOVERY AND METHOD FOR OPERATION OF SUCH A COMBUSTION ENGINE
MOTEUR A COMBUSTION INTERNE DOTE UN DISPOSITIF D'UTILISATION DE L'ENERGIE DES GAZ D'ECHAPPEMENT ET PROCEDE DE FONCTIONNEMENT D'UN TEL MOTEUR A COMBUSTION INTERNE

(30) Priorität: 30.03.2015 DE 102015205737
(43) Veröffentlichungstag der Anmeldung: 12.10.2016
(73) Patentinhaber: AVL List GmbH, 8020 Graz (AT)
(72) Erfinder: Schöggl, Dr. Peter, 8151 Hitzendorf (AT); Wieser, Karl, 8044 Graz (AT)
(74) Vertreter: Breuer Friedrich Hahner Patentanwälte PartG mbB

(56) Entgegenhaltungen:
- EP-A1- 1 586 842
- EP-A2- 0 038 232
- CH-A5- 598 551
- DE-A1- 2 038 810
- DE-A1- 3 818 230

## Beschreibung

Die Erfindung betrifft eine Brennkraftmaschine, welche eine Turbinenvorrichtung mit einem ersten Turbinenrad, welches in der Weise in einer Abgasanlage der Brennkraftmaschine angeordnet ist, dass es mit Abgas betreibbar ist, und eine Verdichtervorrichtung mit einem ersten Verdichterrad, aufweist. Das erste Turbinenrad und das erste Verdichterrad sind mit einer gemeinsamen Welle gekoppelt. Des Weiteren betrifft die Erfindung ein Verfahren zum Betrieb einer solchen Brennkraftmaschine.

In einer Brennkraftmaschine wird nur ein relativ geringer Anteil der im eingesetzten Brennstoff chemisch gebundenen Energie in mechanische Leistung umgesetzt, während ein vergleichsweise großer Anteil über die Abgaswärmeströme und die Kühlwasserströme der Brennkraftmaschine nutzlos in die Umgebung abgegeben werden. Insofern Brennkraftmaschinen für den Einsatz in Fahrzeugen betroffen sind, ist der Anteil der für den Fahrzeugantrieb genutzten mechanischen Energie im Verhältnis zur eingesetzten chemischen Energie des Brennstoffs nochmals geringer, wenn auch die Strahlungswärmeverluste, die Motorreibungsverluste und die Getriebeverluste vergleichsweise gering zu den thermischen Verlusten bei der Verbrennung sind. Mit zunehmender Verknappung und Verteuerung fossiler Brennstoffe wird jedoch eine Steigerung des Gesamtwirkungsgrads von Brennkraftmaschinen immer wichtiger. Ein Ansatz besteht hierbei in der Nutzung der restlichen Energie, welche noch in dem Abgas der Brennkraftmaschine enthalten ist.

Davon unabhängig besteht bei Fahrzeugen, welche im Renn- und Sportbereich eingesetzt werden, die Notwendigkeit, Haftungsgrenzen zwischen den Reifen und der Fahrbahnoberfläche mit aerodynamischen Hilfsmitteln heraufzusetzen, da bei diesen Fahrzeugen Beschleunigung, Verzögerung und Kurvenbeschleunigung erzielt werden, die den Wert von 1 g (Erdbeschleunigung) z.T. wesentlich überschreiten. Hierfür muss am Fahrzeugkörper ein starker Abtrieb erzeugt werden, beispielsweise mittels eines Frontflügels, Heckflügels und insbesondere mit der Formgebung des eigentlichen Fahrzeugkörpers. Eine herausragende Rolle spielt dabei die Gestaltung des Fahrzeugunterbodens. Bei dieser wird angestrebt, die unter dem Fahrzeugboden strömende Luft so stark wie nur möglich zu beschleunigen. Je höher deren Geschwindigkeit, desto stärker ist nach dem Bernoulli'schen Gesetz deren Saugkraft und desto stärker ist der auf den Fahrzeugunterboden ausgeübte Abtrieb. Um eine möglichst starke Beschleunigung der Unterbodenluft zu erreichen, wird bei Rennfahrzeugen des Stands der Technik auch die kinetische Energie der Abgase herangezogen. Hierfür wird insbesondere der Unterboden am Heck des jeweiligen Fahrzeugs nach oben gebogen und meist mit senkrechten aerodynamischen Leitblechen zur Seite hin abgeschirmt und eventuell noch in der Mitte unterteilt. Auf diese Weise entsteht für die Luft, die an dem Fahrzeug entlangströmt, ein Diffusor. In diese Diffusorzone werden vorzugsweise die Enden der Auspuffrohre mit einer waagrechten, nach hinten zielenden Strahlrichtung eingeleitet. Mit hoher Geschwindigkeit austretende Abgase üben auf die Luft unter dem Unterboden eine Saugwirkung aus und erhöhen deren Geschwindigkeit und hiermit wiederum die Saugwirkung zwischen Fahrbahnoberfläche und dem Unterboden und somit den Abtrieb des Fahrzeugs.

Die WO 2010/000285 A1 offenbart eine Brennkraftmaschine mit Mitteln zur Umwandlung von thermischer Abgasenergien in mechanische Leistung, wobei in den Abgasstrang der Brennkraftmaschine ein Wärmetauscher eingesetzt ist, der Teil einer offenen Gasdruckturbinenanlage ist, die einen vor dem Wärmetauscher liegenden Verdichter und einen dem Wärmetauscher nachgeordnete Turbine umfasst.

Die AT 512 639 A1 betrifft ein Fahrzeug, insbesondere ein Rennfahrzeug, mit einer Brennkraftmaschine aufweisend eine Antriebseinheit, und zumindest eine Wärmekraftanlage zur Rückgewinnung von Wärme aus einem wärmeabgebenden Bauteil oder einer wärmeabgebenden Baugruppe, wobei das Bauteil oder die Baugruppe an zumindest einen von einem Arbeitsgas, insbesondere Luft, durchströmten Raum grenzt und zumindest teilweise von dem durchströmten Raum umgeben ist. Das Rennfahrzeug weist des Weiteren einen Verdichter und eine erste Turbine auf, wobei die Austrittsseite des ersten Verdichters mit dem Einlassbereich des Raums strömungsverbunden ist, dessen Auslassbereich mit der Eintrittsseite der ersten Turbine strömungsverbunden ist, wobei der Austrittsströmungsweg der ersten Turbine und der Austrittsströmungsweg des ersten Verdichters, vorzugsweise über zumindest einen ersten Wärmetauscher, thermisch miteinander verbunden sind. Vorzugsweise ist eine Austrittsöffnung des Austrittsströmungswegs im Bereich eines Staupunkts an der Fahrbahn zugewandten Seite eines Diffusors des Fahrzeugs angeordnet.

Die DE 600 22 907 T2 betrifft eine Abwärme-Rückgewinnungsvorrichtung für einen Verbrennungsmotor, welcher eine Mehrzahl an Abgasrohren, die sich jeweils von Zylindern des Mehrzylinder-Verbrennungsmotors erstrecken, und einen oder mehrere Wärmetauscher, die mit den Zylindern verbunden sind, umfasst, wobei die Abgasrohre ein oder mehrere Sammelrohre umfassen, welche Abgas von einer Mehrzahl der Abgasrohre zusammenführen, wobei jedes Sammelrohr mit einem Wärmetauscher zum Rückgewinnen von Abgaswärme versehen ist, und wobei die Abwärme-Rückgewinnungsvorrichtung des Weiteren ein Rankine-Kreislauf-System aufweist.

Die EP 0 038 232 A2 betrifft ein Verfahren und eine Vorrichtung zur Leistungserzeugung mittels einer aufgeladenen Brennkraftmaschine, wobei der Verbrennungsmotor durch einen Luftturbokompressor aufgeladen wird und dessen Auspuffgase durch eine Zweigleitung in die zur Beschickung der Turbine dienende Auspuffgasleitung eine abgeleitete Druckmenge verdrängen.

Vor dem Hintergrund dieses Stands der Technik ist es ist eine Aufgabe der Erfindung, eine Vorrichtung und ein Verfahren bereitzustellen, bei welchen Restenergie im Abgas auf einfache Weise effizient genutzt werden kann. Eine weitere Aufgabe der Erfindung ist es, den Strömungszustand und/oder die Straßenlage eines Fahrzeugs zu verbessern. Eine Lösung bietet eine Maschine nach Anspruch 1, ein Fahrzeug nach Anspruch 9 und ein Verfahren nach Anspruch 13. Vorteilhafte Ausgestaltungen werden in Unteransprüchen beansprucht. Die Lehre der Ansprüche wird durch ausdrückliche Bezugnahme zum Inhalt der Beschreibung gemacht.

Die erfindungsgemäße Brennkraftmaschine weist eine Turbinenvorrichtung mit einem ersten Turbinenrad, welches in der Weise in eine Abgasanlage der Brennkraftmaschine angeordnet ist, dass sie mit Abgas betreibbar ist, und eine Verdichtervorrichtung mit einem ersten Verdichterrad auf, wobei durch die Verdichtervorrichtung verdichtetes Gas, insbesondere Luft, wenigstens teilweise der Turbinenvorrichtung zugeführt wird. Vorzugsweise weist die Brennkraftmaschine des Weiteren eine gemeinsame Welle, an welche die Turbinenvorrichtung und die Verdichtervorrichtung gekoppelt sind, wobei die Welle insbesondere mit dem ersten Turbinenrad und dem ersten Verdichterrad gekoppelt ist, und einen Wärmetauscher auf, welcher mit der Abgasanlage in der Weise thermisch gekoppelt ist, um Abwärme aus der Abgasanlage auf durch die Verdichtervorrichtung verdichtetes Gas, insbesondere Luft, zu übertragen, welches wiederum der Turbinenvorrichtung zugeführt wird. Der Wärmetauscher weist eine Querschnittsfläche auf, welche in Strömungsrichtung des verdichteten Gases zunimmt, insbesondere in der Weise, dass die makroskopische Strömungsgeschwindigkeit des verdichteten Gases entlang des gesamten Wärmetauschers innerhalb eines vorgegebenen Wertebereichs liegt.

Das erfindungsgemäße Fahrzeug weist eine erfindungsgemäße Brennkraftmaschine auf. Das erfindungsgemäße Verfahren zum Betrieb einer Brennkraftmaschine nutzt eine Umwandlung von thermischer Abgasenergie in mechanische Leistung mittels eines offenen Gasturbinenprozesses, wobei dieses vorzugsweise folgende Arbeitsschritte aufweist: Verdichten von Gas, insbesondere Luft, mittels einer Abgasturbinenvorrichtung; übertragen von Abwärme des Abgases des Brennkraftmaschine auf das verdichtete Gas; und zuführen des erwärmten, verdichteten Gases zu der Abgasturboladervorrichtung.

Eine Turbinenvorrichtung im Sinne der Erfindung ist eine rotierende Strömungsmaschine, welche die Energie wenigstens eines strömenden Fluids in mechanische Energie umwandelt und insbesondere an eine Welle abgibt.

Eine Verdichtervorrichtung im Sinne der Erfindung ist eine Fluidenergiemaschine, welche zum Komprimieren wenigstens eines Gases dient.

Ein Wärmetauscher im Sinne der Erfindung überträgt thermische Energie von einem Stoffstrom auf einen anderen.

Eine Abgasanlage im Sinne der Erfindung ist wenigstens ein Teil jener Leitungen, welche Abgas der Brennkraftmaschine in die Umwelt entlassen.

Ein Gasturbinenprozess im Sinne der Erfindung ist ein thermodynamischer Prozess, der insbesondere in einer Wärmekraftmaschine Verwendung findet, und basiert auf dem Joule-Kreisprozess.

Ein Abgasturbolader im Sinne der Erfindung ist eine Vorrichtung zur Leistungs- bzw. Effizienzsteigerung von Kolbenmotoren, bei welcher wenigstens ein Turbinenrad mit einem Verdichterrad gekoppelt ist.

Gekoppelt im Sinne der Erfindung bedeutet das Vorsehen einer Wirkverbindung zwischen zwei Elementen, insbesondere ein Drehverbinden. Eine solche Kopplung ist vorzugsweise auch über ein Getriebe möglich.

Thermisch verbunden im Sinne der Erfindung bedeutet, dass Wärmeenergie zwischen zwei Elementen ausgetauscht werden kann.

Die Erfindung basiert insbesondere auf dem Ansatz, mit einem Turbinenrad einer Abgasturbine in der Abgasanlage einer Brennkraftmaschine ein Verdichterrad eines Verdichters zu betreiben. Dieses Turbinenrad verdichtet ein Gas, welches, nach einer weiteren Erwärmung durch Abwärme des Abgases, wiederum dem Turbinenrad oder einem weiteren, gekoppelten Turbinenrad zugeführt wird. Dabei wird dem Abgas entnommene thermische Energie auf der Grundlage eines Gasturbinenprozesses in kinetische Energie umgewandelt. Hierdurch kann durch eine Brennkraftmaschine 10% bis 15% mehr Leistung erzielt werden oder die Effizienz der Brennkraftmaschine um dieselbe Größe erhöht werden. Von Bedeutung ist für die Erfindung, dass die Turbinenvorrichtung und die Verdichtervorrichtung, vorzugsweise deren wenigstens eines Turbinenrad und wenigstens eines Verdichterrad gekoppelt sind.

In einer vorteilhaften Ausgestaltung der erfindungsgemäßen Brennkraftmaschine durchströmt das verdichtete Gas den Wärmetauscher in Bezug auf das Abgas in der Abgasanlage im Gegenstromprinzip. Durch Ausnutzung des Gegenstromprinzips durch den Wärmetauscher ist eine im Idealfall theoretisch eine vollständige Wärmerückgewinnung der thermischen Energie aus dem Abgas möglich.

In einer weiteren vorteilhaften Ausgestaltung der erfindungsgemäßen Brennkraftmaschine versorgt die Verdichtervorrichtung des Weiteren die Brennkraftmaschine mit Gas. In diesem Fall ist die Verdichtervorrichtung ein Bestandteil einer Abgasturboladervorrichtung der Brennkraftmaschine. Der Einsatz eines Abgasturboladers zur Verdichtung der einer Brennkraftmaschine vorzugsweise über einen Ladeluftkühler zugeführten Luft führt zu einer besseren Verbrennung und erlaubt somit ebenfalls eine Nutzung der thermischen Energie des Abgases zum Betrieb der Brennkraftmaschine.

In einer weiteren vorteilhaften Ausgestaltung der erfindungsgemäßen Brennkraftmaschine weist diese des Weiteren eine Elektromaschine auf, welche ebenfalls mit der Welle gekoppelt ist. Das Vorsehen einer Elektromaschine ermöglicht es, die rückgewonnene thermische Energie in elektrische Energie umzuwandeln, welche gespeichert werden kann und beispielsweise durch eine elektrische Antriebsmaschine eines Fahrzeugs, insbesondere eines Hybridfahrzeugs, zum Antrieb genutzt werden kann. Weiterhin kann die Elektromaschine eine Verdichtervorrichtung einer Turboladervorrichtung antreiben, beispielsweise um eine Turboloch der Verbrennungskraftmaschine auszugleichen.

In einer weiteren vorteilhaften Ausgestaltung der erfindungsgemäßen Brennkraftmaschine ist der Wärmetauscher mit einem ersten Teil der Abgasanlage, welcher hinsichtlich des Abgases stromabwärts zur Turbineneinrichtung angeordnet ist, mit einem zweiten Teil der Abgasanlage, welche stromaufwärts der Turbineneinrichtung angeordnet ist und/oder wenigstens ein Abgasstrang eines Zylinders thermisch verbunden. Die möglichst vollständige Ausnutzung des Weges des Abgases durch die Abgasanlage zum Übertragen von thermischer Energie an das den Wärmetauscher durchströmende, verdichtete Gas erhöht die Effizienz bei der Rückgewinnung thermischer Energie.

In einer weiteren vorteilhaften Ausgestaltung der erfindungsgemäßen Brennkraftmaschine wird das verdichtete Gas dem ersten Turbinenrad der Turbinenvorrichtung zugeführt wird. Die Nutzung des ersten Turbinenrads in der Turbine eines Abgasturboladers als auch als Gasturbine eines Gasturbinenprozesses ermöglicht eine besondere kompakte Ausgestaltung der Brennkraftmaschine, da keine zusätzliche Turbine für den Gasturbinenprozesses vorgesehen werden muss.

In einer weiteren vorteilhaften Ausgestaltung der erfindungsgemäßen Brennkraftmaschine weist die Turbinenvorrichtung ein zweites Turbinenrad auf, welches mit der gemeinsamen Welle koppelbar ist, wobei das Abgas der Brennkraftmaschine das erste Turbinenrad antreibt und das verdichtete Gas das zweite Turbinenrad antreibt. Werden zur Abgasrückgewinnung aus dem verdichteten Gas und zur Abgasrückgewinnung aus dem Abgasstrom der Verbrennungskraftmaschine zwei verschiedene Turbinen verwendet, können diese jeweils auf die verschiedenen Arbeitsprozesse optimiert werden. Insbesondere herrschen in dem verdichteten Gas sowie in dem Abgas andere Drücke, Strömungsgeschwindigkeiten und Temperaturen vor, welche eine unterschiedliche Auslegung der Turbinen bzw. Turbinenräder sinnvoll machen.

In einer weiteren vorteilhaften Ausgestaltung der erfindungsgemäßen Brennkraftmaschine weist die Verdichtervorrichtung ein zweites Verdichterrad auf, welches mit der gemeinsamen Welle koppelbar ist, wobei das erste Verdichterrad der Turbinenvorrichtung über den Wärmetauscher verdichtetes Gas zuführt, und das zweite Verdichterrad der Verbrennungskraftmaschine verdichtetes Gas zuführt. Auch hierbei kann der jeweilige Verdichter bzw. das Verdichterrad auf die Notwendigkeiten der Motoraufladung oder der Wärmerückgewinnung durch den Wärmetauscher optimiert werden, insbesondere in Bezug auf Druck, Strömungsgeschwindigkeit und/oder Durchsatz.

Erfindungsgemäss weist der Wärmetauscher eine Querschnittsfläche auf, welche in Strömungsrichtung des verdichteten Gases zunimmt, insbesondere in der Weise, dass die makroskopische Strömungsgeschwindigkeit des verdichteten Gases entlang des gesamten Wärmetauschers innerhalb eines vorgegebenen Wertebereichs liegt. Durch diese Maßnahme wird der Druckabfall in dem Wärmetauscher minimiert, d.h. eine Optimierung der Effizienz erreicht.

Die im vorstehenden Aspekte der Erfindung und die dazugehörigen offenbarten Merkmale und Vorteile in Bezug auf die erfindungsgemäße Brennkraftmaschine gelten auch für die nachstehend beschriebenen Aspekte der Erfindung in Bezug auf das erfindungsgemäße Fahrzeug und das erfindungsgemäße Verfahren entsprechend und umgekehrt.

In einer weiteren vorteilhaften Ausgestaltung eines erfindungsgemäßen Fahrzeugs wird entspanntes Gas vom zweiten Turbinenrad wenigstens einem Diffusor des Fahrzeugs zugeführt. Hierdurch kann der Abtrieb und damit die Straßenlage des Fahrzeugs verbessert werden.

In einer weiteren vorteilhaften Ausgestaltung eines erfindungsgemäßen Fahrzeugs ist der Wärmetauscher mit einem Teil einer Gasführung zwischen dem zweiten Turbinenrad und einem Diffusor thermisch gekoppelt. Hierdurch kann etwaig immer noch in dem entspannten Gas vorhandene thermische Energie aufgefangen werden und damit die Effizienz erhöht werden.

In einer weiteren vorteilhaften Ausgestaltung eines erfindungsgemäßen Fahrzeugs durchströmt das verdichtete Gas den Wärmetauscher in Bezug auf das entspannte Gas in der Gasführung im Gegenstromprinzip.

In einer weiteren vorteilhaften Ausgestaltung des erfindungsgemäßen Verfahrens weist dieses des Weiteren den Arbeitsschritt des Übertragens von Abwärme des aus der Abgasturboladervorrichtung austretenden entspannten Gases auf das verdichtete Gas auf.

In einer weiteren vorteilhaften Ausgestaltung des erfindungsgemäßen Verfahrens weist dieses das Umwandeln wenigstens eines Teils von durch die Abgasturboladervorrichtung generierte mechanische in elektrische Energie auf.

In einer weiteren vorteilhaften Ausgestaltung des erfindungsgemäßen Verfahrens weist dieses des Weiteren den Arbeitsschritt des Umwandelns von elektrischer Energie in mechanische Energie an der Abgasturboladervorrichtung auf.

Weitere Merkmale, Vorteile und Anwendungsmöglichkeiten der Erfindung ergeben sich aus den nachfolgenden Beschreibungen in Zusammenhang mit den Figuren. Es zeigt:
Figur 1 eine teilweise schematische Darstellung einer ersten Ausführungsform der erfindungsgemäßen Brennkraftmaschine;
Figur 2 eine teilweise schematische Darstellung der ersten Ausführungsform der erfindungsgemäßen Brennkraftmaschine mit zusätzlicher Elektromaschine;
Figur 3 eine teilweise schematische Darstellung einer zweiten Ausführungsform der erfindungsgemäßen Brennkraftmaschine mit einer Elektromaschine;
Figur 4 eine teilweise schematische Darstellung einer dritten Ausführungsform der erfindungsgemäßen Brennkraftmaschine mit einer Elektromaschine;
Figur 5 eine weitere teilweise schematische Darstellung der dritten Ausführungsform der erfindungsgemäßen Brennkraftmaschine mit einer Elektromaschine;
Figur 6 eine teilweise schematische Darstellung einer ersten Ausführungsform eines erfindungsgemäßen Fahrzeugs mit einer erfindungsgemäßen Brennkraftmaschine gemäß der dritten Ausführungsform;
Figur 7 eine teilweise schematische Darstellung einer zweiten Ausführungsform eines erfindungsgemäßen Fahrzeugs mit einer erfindungsgemäßen Brennkraftmaschine gemäß der dritten Ausführungsform;
Figur 8 eine teilweise schematische Darstellung einer vierten Ausführungsform der erfindungsgemäßen Brennkraftmaschine mit einer Elektromaschine;
Figur 9 eine teilweise schematische Darstellung einer fünften Ausführungsform der erfindungsgemäßen Brennkraftmaschine mit einer Elektromaschine; und
Figur 10 eine teilweise schematische Darstellung einer dritten Ausführungsform eines erfindungsgemäßen Fahrzeugs mit einer erfindungsgemäßen Brennkraftmaschine gemäß der fünften Ausführungsform.

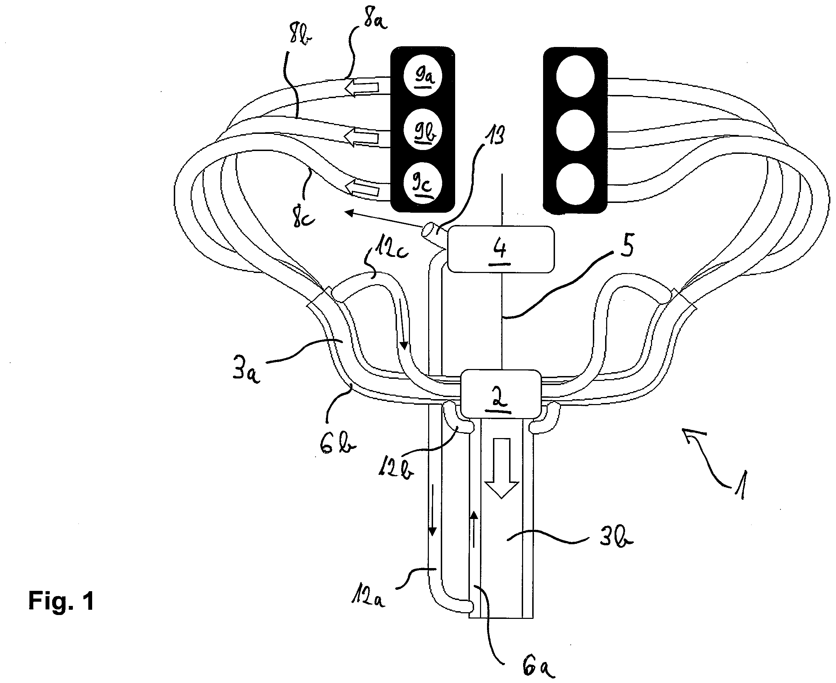

Fig. 1 stellt eine erste Ausführungsform einer erfindungsgemäßen Brennkraftmaschine 1 dar. Die Brennkraftmaschine weist sechs Zylinder auf, wobei jeweils drei Zylinder 9a, 9b, 9c in Reihe angeordnet sind. Aus Gründen der Übersichtlichkeit wird die Erfindung nur in Bezug auf ein Tripel von Zylindern beschrieben. Die entsprechende Abgasverläufe, Gasführung und Wärmetauscher gelten jedoch auch entsprechend für das andere Tripel an Zylindern, wie in den Figuren auch dargestellt ist. Auch kann die Erfindung für jede Art von Verbrennungskraftmaschine eingesetzt werden. Die Erfindung ist hierbei weder auf eine bestimmte Anzahl an Zylindern beschränkt, noch auf Verbrennungskraftmaschinen, die mit Zylindern arbeiten. So könnte die Erfindung beispielsweise auch bei Drehkolbenmaschinen zum Einsatz kommen.

Abgas aus den Zylindern 9a, 9b, 9c strömt vorzugsweise über Abgasstränge 8a, 8b, 8c in eine Abgasanlage 3a, 3b und wird von dieser vorzugsweise in die Umwelt entlassen. Zwischen einem ersten Teil 3a der Abgasanalage und einem zweiten Teil 3b der Abgasanlage ist vorzugsweise eine Turbinenvorrichtung 2 angeordnet, welche von dem Abgas aus dem ersten Teil 3a, welcher stromaufwärts der Turbinenvorrichtung 2 liegt, durchströmt wird, wodurch eine Welle 5, die an einem Turbinenrad der Turbinenvorrichtung 2 gekoppelt ist, in Rotation versetzt wird. Nach Durchströmen der Turbinenvorrichtung 2 verlässt das Abgas die Brennkraftmaschine 1 über den zweiten Teil 3b der Abgasanlage. Vorzugsweise weist die Brennkraftmaschine 1 des Weiteren eine Verdichtervorrichtung 4 auf, welche eingerichtet ist, um Gas zu verdichten. Vorzugsweise saugt die Verdichtervorrichtung 4 als Gas Luft aus der Umwelt an, verdichtet diese mittels einem Verdichterrad (nicht dargestellt) und führt diese einerseits über einen ersten Teil 12a einer Gasführung zu einem ersten Teil 6a eines Wärmetauschers und andererseits über eine weitere Gasführung 13 zu einem Ladekühler (nicht dargestellt), von wo aus die Luft in die Verbrennungsräume der Zylinder 9a, 9b, 9c eingebracht wird.

Die Turbinenvorrichtung 2, die Verdichtervorrichtung 4 und die Welle 5 bilden somit vorzugsweise die wesentlichen Elemente einer Abgasturboladervorrichtung des Stands der Technik, mit dem Unterschied, dass von der Verdichtervorrichtung 4 verdichtete Luft vorzugsweise einem Wärmetauscher 6a, 6b zugeführt wird. Von dem ersten Teil 6a des Wärmetauschers strömt die Luft vorzugsweise über einen zweiten Teil 12b der Gasführung in einen zweiten Teil 6b des Wärmetauschers und über einen dritten Teil 12c der Gasführung wiederum in den Arbeitsraum der Turbinenvorrichtung 2, wo sich vorzugsweise das Turbinenrad befindet. Während des Durchströmens des Wärmetauschers 6a, 6b wird die durch die Verdichtervorrichtung 4 verdichtete Luft durch von in der Abgasanlage 3a, 3b enthaltene thermische Energie erhitzt. Vorzugweise ist die Abgasanlage 3a, 3b in den Bereichen des Wärmetauscher 6a, 6b in diesen integriert. Typischerweise verlässt die bereits durch die Verdichtungsvorrichtung 4 vorgewärmte Luft die Verdichtungsvorrichtung 4 mit ca. 150°C bis 200°C und weist beim Eintritt in die Turbinenvorrichtung 2 mehr als 600°C auf. Die in der verdichteten Luft enthaltene potenzielle Energie wird durch die Turbinenvorrichtung 2 vorzugsweise in einer Art von Gasturbinenprozess wenigstens teilweise in kinetische Energie umgesetzt, welche ebenfalls auf die Welle 5 übertragen wird. Die auf über 600°C erhitzte Luft verlässt die Turbinenvorrichtung 2 vorzugsweise mit ca. 200°C bis 300°C, wobei zu beachten ist, dass diese bei der ersten Ausführungsform der Fig. 1 mit dem Abgas der Brennkraftmaschine 1 im zweiten Teil 3b der Abgasanlage vermengt ist.

Die erfindungsgemäße Brennkraftmaschine 1 kann Effizienzgewinne von 10% bis 15% gegenüber einer turbogeladenen Brennkraftmaschine des Stands der Technik realisieren. So kann eine Leistung einer solchen Brennkraftmaschine aus dem Stand der Technik um 15kW bis 20 kW gesteigert werden, wenn die Energie aus dem offenen Gasturbinenprozess, welcher durch den Verdichter 4, den Wärmetauscher 6a, 6b und die Turbine 2 realisiert wird, addiert wird.

Zwar muss zum Verdichten der Luft von der Verdichtervorrichtung 4 Arbeit aufgewendet werden, allerdings wird diese Arbeit um ein Vielfaches durch die aus dem Abgas rückgewonnene thermische Energie kompensiert. Um in der Gasführung 12a, 12b, 12c und dem Wärmetauscher 6a, 6b möglichst wenig Drosselverluste zu haben, bevorzugt von weniger als 0,5 bar bei einer mit mehr als 2 bar von der Verdichtervorrichtung 4 verdichteten Luft, nimmt die Querschnittsfläche der Gasführungen und des Wärmetauschers ausgehend vom Ausgang der Verdichtervorrichtung 4 über den ersten Teil 12a der Gasführung, den ersten Teil 6a des Wärmetauschers, den zweiten Teil 12b der Gasführung, den zweiten Teil 6b des Wärmetauschers und den dritten Teil 12c der Gasführung bis hin zu der Turbinenvorrichtung 2 zu. Hierbei hat sich herausgestellt, dass vorzugsweise eine Durchflussgeschwindigkeit durch die Gas- bzw. luftführenden Teile von 50 m/Sek. bis 80 m/Sek. zu besonders geringen Drosselverlusten führt. Der Querschnitt der gasführenden Teile nimmt daher vorzugsweise ausgehend von der Verdichtervorrichtung 4 bis zu der Turbinenvorrichtung 2 in der Weise zu, dass bei zunehmender Temperatur und damit zunehmendem Volumen des Gases bzw. der Luft eine Durchflussgeschwindigkeit von 50 m/Sek. bis 80 m/Sek. an jeder Stelle der gasführenden Teile erhalten bleibt. Wird eine Erwärmung des Gases ausgehend von der Verdichtervorrichtung 4 bis zu der Turbinenvorrichtung 2 von 150°C auf mehr als 600°C zugrunde gelegt, so muss sich der Querschnitt über diese Strecke vorzugsweise etwa verdoppeln.

Gleiche Elemente sind in den Figuren insbesondere mit gleichen Bezugszeichen bezeichnet.

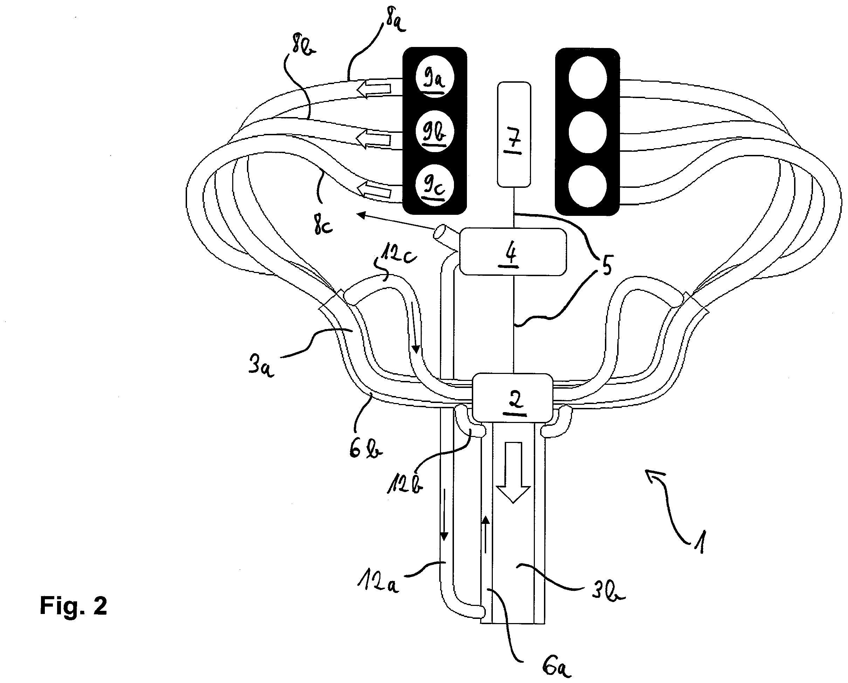

Fig. 2 betrifft eine zweite Ausführungsform der erfindungsgemäßen Brennkraftmaschine 1, bei welcher die Welle 5 zusätzlich mit einer Elektromaschine gekoppelt ist. Die Elektromaschine 7 kann dazu benutzt werden, überschüssige Energie, welche von der Verdichtervorrichtung 2 erzeugt wird, in elektrische Energie umzuwandeln, welche vorzugsweise in einem elektrochemischen Energiespeicher gespeichert werden kann. Andererseits kann gespeicherte Elektroenergie in einem elektrochemischen Speicher wiederum reversibel in kinetische Energie umgewandelt werden und auf die Welle 5 übertragen werden, wodurch beispielsweise der Verdichter 4 angetrieben werden kann, um den Zylindern 9a, 9b, 9c über den Ladekühler (nicht dargestellt) verdichtete Luft bereitzustellen. Hiermit kann beispielsweise ein Turboloch überbrückt werden. Auch ist denkbar, dass die von der Elektromaschine 7 im Generatorbetrieb erzeugte Energie einer weiteren Elektromaschine (auch nicht dargestellt) zugeführt wird, welche ein Antriebsmoment erzeugen kann, z.B. an den Rädern eines Fahrzeugs. Anstatt einer Elektromaschine 7 ist auch ein Einsatz einer Kompressorvorrichtung möglich. Die Energie wird in diesem Fall vorzugsweise dann in einem Druckgasspeicher gespeichert und kann ebenfalls reversibel zur Steigerung der Leistung der Brennkraftmaschine 1 abgerufen werden.

Alle weiteren Ausführungsformen werden stets mit einer Elektromaschine 7 dargestellt. Die Ausführungsformen können aber auch, wie die erste Ausführungsform aus Fig. 1, ohne diese jeweilige Elektromaschine 7 ausgeführt und betrieben werden. Wie ebenfalls in den Figuren 1 und 2 gezeigt, werden alle weiteren Ausführungsformen mit wenigstens einem Teil 6a des Wärmetauschers um den zweiten Teil 3b der Abgasanlage (Auspuff) und einen ersten Teil 3a der Abgasanlage dargestellt. Auch hier ist es jedoch bei allen Ausführungsformen möglich, nur einen der beiden Teile 6a, 6b des Wärmetauschers vorzusehen, insbesondere den Teil 6a welcher mit dem zweiten Teil 3b der Abgasanlage thermisch verbunden ist.

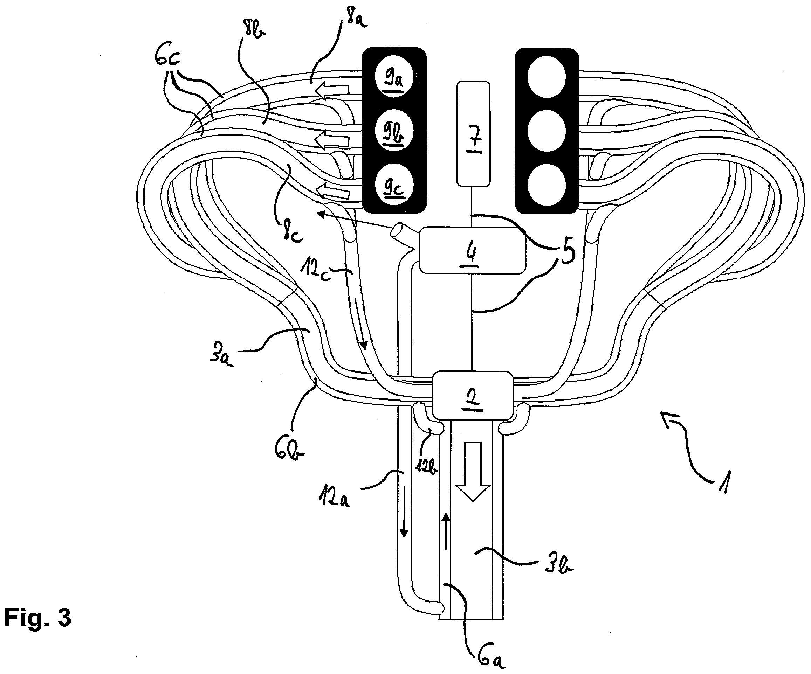

Fig. 3 zeigt eine zweite Ausführungsform der erfindungsgemäßen Brennkraftmaschine 1, welche sich von der ersten Ausführungsform dadurch unterscheidet, dass der Wärmetauscher einen dritten Teil 6c aufweist, welcher sich vom zweiten Teil 6b des Wärmetauschers über die Abgasstränge 8a, 8b, 8c der Zylinder 9a, 9b, 9c erstreckt. Das von der Verdichtervorrichtung 4 verdichtete Gas wird erst unmittelbar am Ende der Abgasstränge 8a, 8b, 8c, welche an den Motorblock grenzen, abgeleitet und über den dritten Teil 12c der Gasführung zu der Turbinenvorrichtung 2 geleitet. Durch die Verlängerung des Wärmetauschers um den dritten Teil 6c wird eine bessere Übertragung der thermischen Energie im Abgas auf die in den gasführenden Elementen vorhandene Luft gewährleistet.

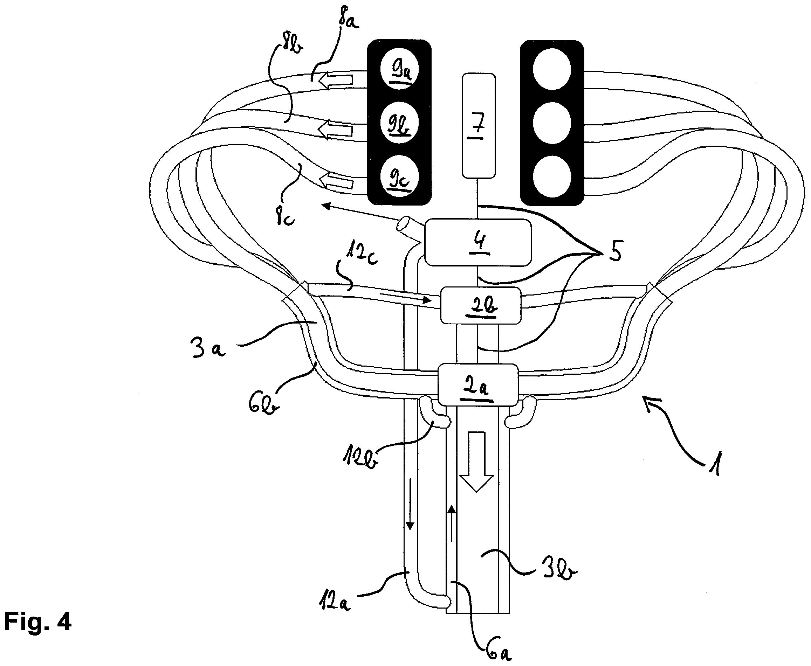

Fig. 4 stellt eine dritte Ausführungsform der erfindungsgemäßen Brennkraftmaschine 1 dar, welche sich von den ersten und zweiten Ausführungsformen insbesondere dadurch unterscheidet, dass die Turbinenvorrichtung in zwei Teile 2a, 2b aufgeteilt ist, welche jeweils vorzugsweise eine Turbine mit einem Turbinenrad aufweisen. Die verdichtete Luft aus dem Wärmetauscher 6a, 6b wird über den dritten Teil 12c der Gasführung hierbei nicht einem ersten Turbinenrad zugeführt, welches im Abgasstrom der Brennkraftmaschine 1 angeordnet ist, sondern wird einem zweiten Turbinenrad im zweiten Teil 2b der Turbinenvorrichtung zugeführt. In diesem zweiten Teil 2b der Turbinenvorrichtung wird die potenzielle Energie aus der durch die Verdichtervorrichtung 4 verdichteten und durch den Wärmetauscher 6a, 6b erhitzten Luft in einem Gasturbinenprozess in kinetische Energie umgewandelt, welche vorzugsweise auf die Welle 5 übertragen wird. Das entspannte Gas, welches aus dem zweiten Teil 2b der Turbinenvorrichtung ausströmt, wird vorzugsweise zusammen mit dem Abgas über den zweiten Teil 3b der Abgasanlage abgeführt. Das Vorsehen einer Gasturbine 2b, welche getrennt von der Turbine 2a des Abgasturboladers ist, hat den Vorteil, dass jede Turbine auf ihren speziellen Einsatz und ihre jeweiligen Betriebspunkte optimiert werden kann. So kann die Turbine 2b auf einen Gasturbinenprozess optimiert werden, wohingegen die Turbine 2a im Abgasstrang insbesondere den Druck (Stauaufladung) und die Bewegungsenergie der Abgase (Stoßaufladung) aus dem Abgas abgreift.

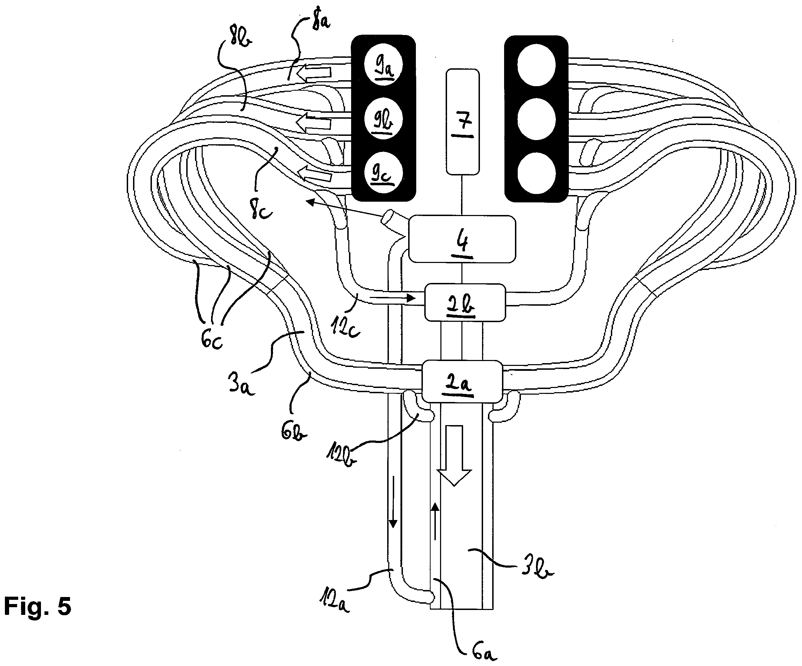

Auch in dieser Ausführungsform können weitere Teile 6c des Wärmetauschers vorgesehen sein, mit welche weitere abgasführende Elemente der Brennkraftmaschine 1 in thermischer Verbindung stehen, wie dies in Fig. 5 dargestellt ist.

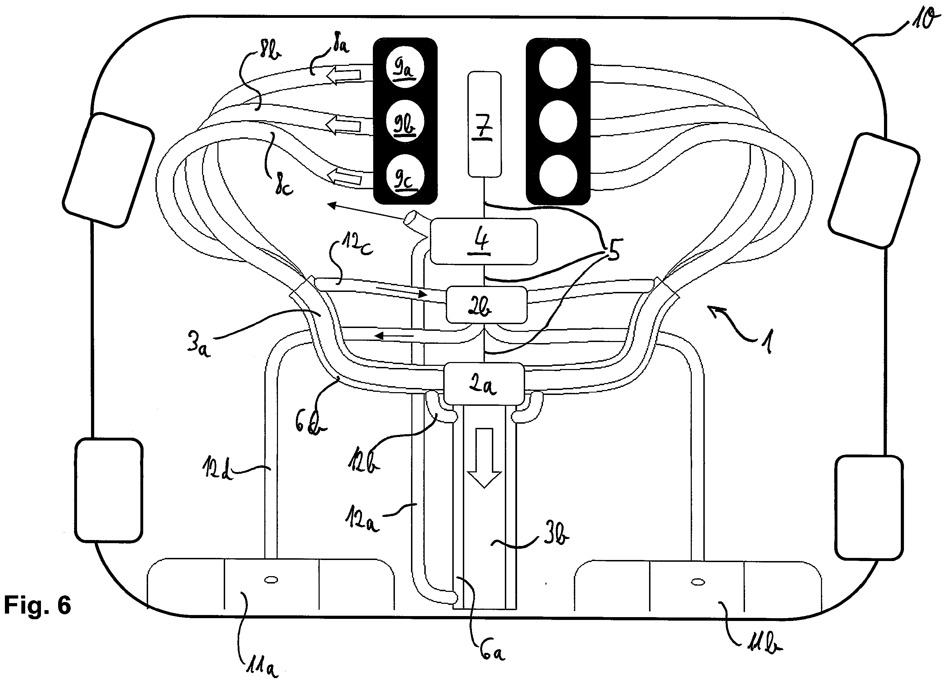

Fig. 6 stellt eine erste Ausführungsform eines erfindungsgemäßen Fahrzeugs 10 mit einer erfindungsgemäßen Brennkraftmaschine 1 gemäß der dritten Ausführungsform dar. Diese Ausführungsform des Fahrzeugs zeichnet sich dadurch aus, dass die aus dem zweiten Teil 2b der Turbinenvorrichtung 2 austretende entspannte Luft vorzugsweise über einen vierten Teil 12d einer Gasführung einem Diffusor 11a, 11b zugeführt wird, welcher, wie in Fig. 6 dargestellt, aus zwei Teilen bestehen kann, welche vorzugsweise im Heckbereich des Fahrzeugs 10 angeordnet sind. Durch das Anströmen des Diffusors 11a, 11b mit der entspannten Luft, welche eine hohe Durchflussgeschwindigkeit und eine gegenüber der Umwelt erhöhte Temperatur aufweist, kann der durch den Diffusor 11A, 11b erzeugte Abtrieb auf das Fahrzeug verstärkt werden.

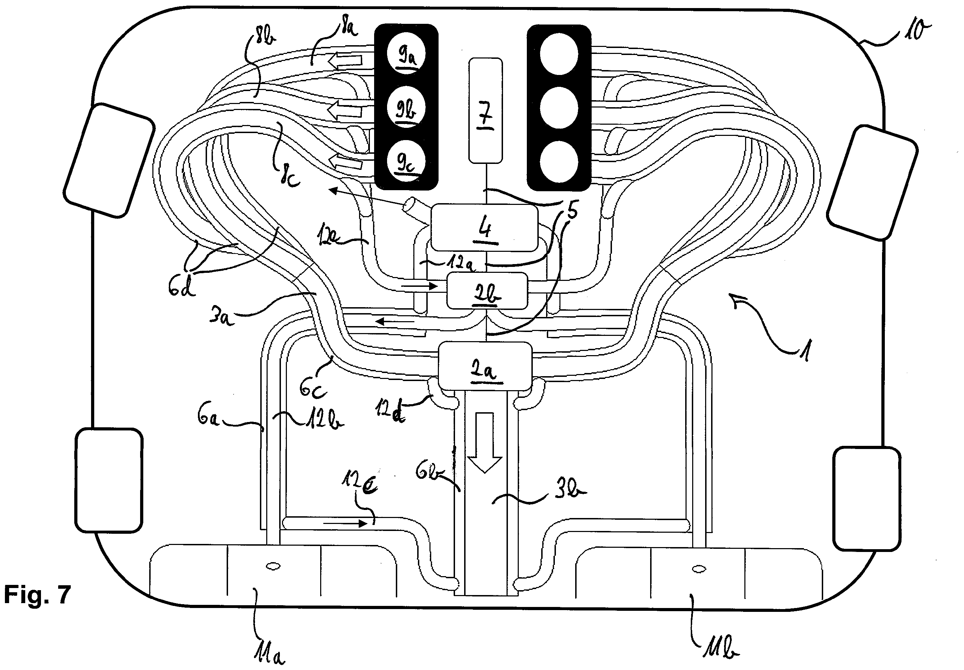

Figur 7 stellt eine zweite Ausführungsform eines erfindungsgemäßen Fahrzeugs 10 dar, welches sich von der ersten Ausführungsform gemäß der Fig. 6 einerseits dadurch unterscheidet, dass weitere Teile des Wärmetauschers vorgesehen sind, welche in Fig. 7 mit den Bezugszeichen 6a und 6d bezeichnet sind. Selbstverständlich kann auch nur einer der weiteren Teile 6a, 6d vorgesehen sein und/oder diese können einen oder beide der Teile 6b, 6c ersetzen. Der erste Teil 6a des Wärmetauschers unterscheidet sich hierbei von dem zweiten Teil 6b, dem dritten Teil 6c und dem vierten Teil 6d des Wärmetauschers dadurch, dass dieser nicht thermisch mit abgasführenden Elementen des Fahrzeugs 10 gekoppelt ist, sondern mit einem zweiten Teil 12b der Gasführung, welche die aus dem zweiten Teil 2b der Turbinenvorrichtung 2 austretende entspannte Luft dem Diffusor 11a, 11b zuführt. Die verdichtete Luft von dem Verdichter 4 wird vorzugsweise weiter über die Wärmetauscher 6b, 6c, 6d zu dem ersten Teil der Turbinenvorrichtung 2a, welche mit der Verdichtervorrichtung 4 den Abgasturbolader bildet, gefördert. Hierdurch kann auch restliche thermische Energie, welche noch in der den zweiten Teil 2b der Turbinenvorrichtung verlassenden entspannten Luft vorhanden ist, auf die verdichtete Luft übertragen werden. In Fig. 7 durchfließen die entspannte Luft und die verdichtete Luft den Wärmetauscher 6a dabei zur Bildung eine kompakten Ausführung in Gleichstromrichtung. Vorzugsweise kann jedoch auch vorgesehen sein, dass die verdichtete Luft den ersten Teil 6a des Wärmetauschers ebenfalls in Gegenstromrichtung zur entspannten Luft durchfließt, wie dies in Bezug auf den Abgasstrom in dem zweiten Teil 6b, dem dritten Teil 6c und dem vierten Teil 6d des Wärmetauschers der Fall ist.

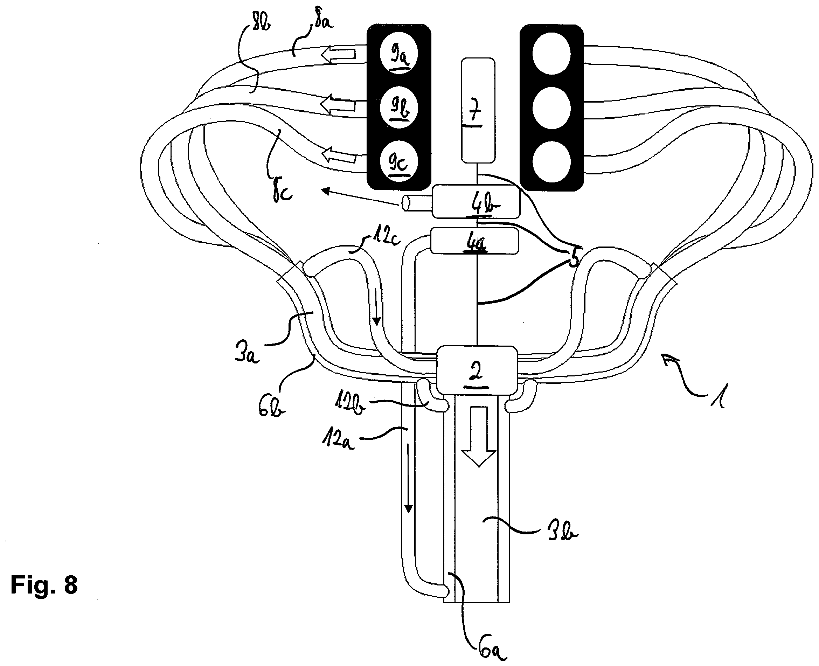

Figur 8 stellt eine vierte Ausführungsform der erfindungsgemäßen Brennkraftmaschine 1 mit einer Elektromaschine 7 dar. Im Unterschied zu den in den Figuren 1 bis 7 gezeigten ersten bis dritten Ausführungsformen der erfindungsgemäßen Brennkraftmaschine 1 weist die Verdichtervorrichtung der vierten Ausführungsform einen ersten Teil 4a und einen zweiten Teil 4b auf, wobei der erste Teil 4a vorzugsweise ein erstes Verdichterrad, und der zweite Teil 4b vorzugsweise ein zweites Verdichterrad aufweist. Der zweite Verdichter 4b stellt hierbei verdichtete Luft, vorzugsweise über einen Ladeluftkühler (nicht gezeigt), an den Brennraum der Zylinder 9a, 9b, 9c bereit. Der erste Verdichter 4a stellt vorzugsweise verdichtete Luft bereit, welche den Wärmetauscher 6a, 6b durchströmt und zusammen mit der Turbinenvorrichtung 2 einen Gasturbinenprozess ausführt. Beide Turbinen 4a, 4b der Turbinenvorrichtung beziehen dabei als Gas vorzugsweise Luft aus der Umwelt.

Durch das Vorsehen eines ersten Verdichters 4a und eines zweiten Verdichters 4b kann jeder Verdichter auf sein jeweiliges Einsatzfeld optimiert werden. Beispielsweise arbeitet der Verdichter 4b, welcher zusammen mit der Turbinenvorrichtung 2 vorzugsweise eine Abgasturboladervorrichtung bildet, vorzugsweise mit einem anderen Ausgangsdruck für die Aufladung der Brennkraftmaschine 1 als der Verdichter 4a, welche einen Druck für den Gasturbinenprozess bereitstellt, welcher vorzugsweise zusammen mit der Turbinenvorrichtung 2 ausgeführt wird.

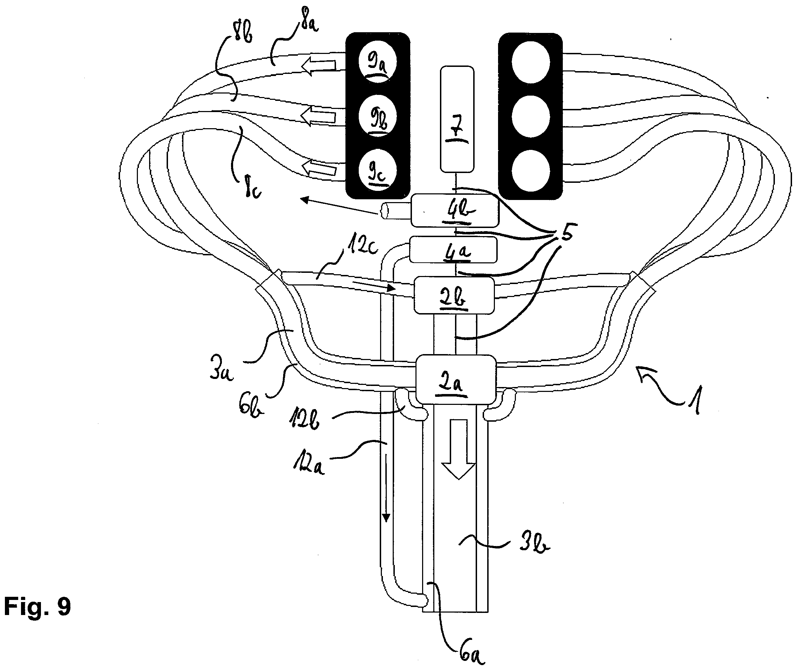

Fig. 9 stellt eine fünfte Ausführungsform der erfindungsgemäßen Brennkraftmaschine dar. Diese Ausführungsform unterscheidet sich von den Ausführungsformen, welche in den Figuren 1 bis 8 gezeigt sind, dadurch, dass sowohl die Turbinenvorrichtung einen ersten Teil 2a und einen zweiten Teil 2b, als auch die Verdichtervorrichtung einen ersten Teil 4a und einen zweiten Teil 4b aufweist.

Durch das Vorsehen von jeweils unterschiedlichen Turbinen und Verdichtern für den Turbolader und den Gasturbinenprozess können die jeweiligen Elemente für ihren Betriebsbereich optimiert werden.

Sowohl bei der vierten Ausführungsform gemäß Fig. 8 als auch bei der fünften Ausführungsform gemäß Fig. 9 sind alle Elemente der Turbinenvorrichtung und der Verdichtervorrichtung mit der der Welle 5 gekoppelt, insbesondere das erste und das zweite Turbinenrad sowie das erste und das zweite Verdichterrad (alle nicht dargestellt). Auch kann der Wärmetauscher beider Ausführungsformen weitere Teile aufweisen, sowie auch eines der beiden dargestellten Teile 6a, 6b des Wärmetauschers weggelassen oder auch ersetzt werden kann.

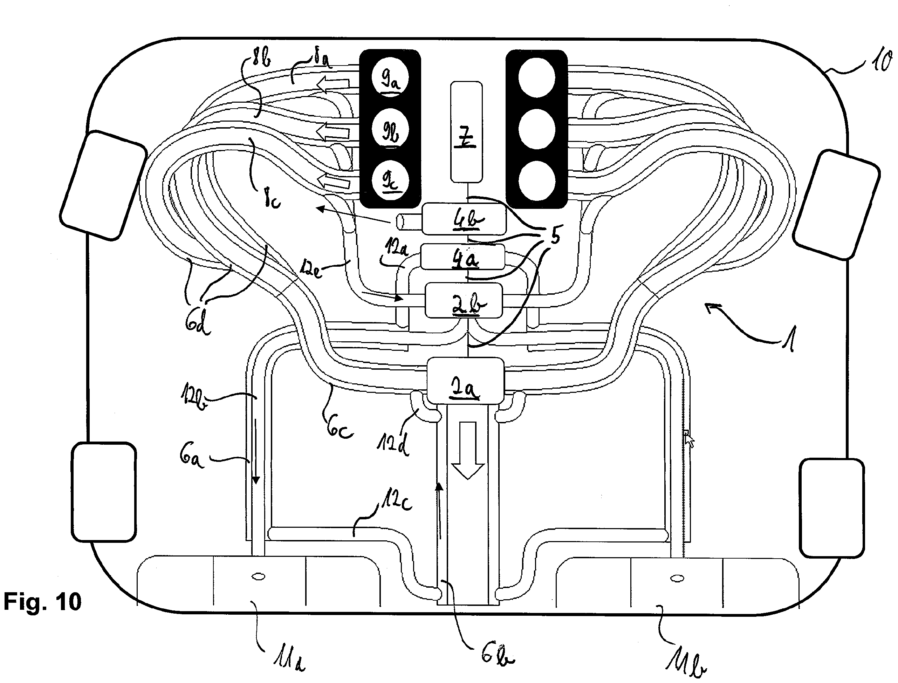

Figur 10 stellt eine dritte Ausführungsform des erfindungsgemäßen Fahrzeugs 10 dar, welche eine Brennkraftmaschine 1 gemäß der fünften Ausführungsform nach Fig. 9 aufweist, wobei gegenüber der Fig. 9 weitere Teile 6a, 6d eines Wärmetauschers vorhanden sind. Wie in den Ausführungsformen des erfindungsgemäßen Fahrzeugs 10 der Figuren 6 und 7 weist auch diese Ausführungsform einen Diffusor 11a, 11b auf, welcher vorzugsweise aus zwei Teilen besteht, die im Bereich des Hecks des Fahrzeugs 10 angeordnet sind. Wie bei der Ausführungsform gemäß Fig. 7 weist auch diese Ausführungsform einen Wärmetauscher 6a auf, welcher der entspannten Luft, die die zweite Turbine 2b verlässt, thermische Energie entziehen kann.

### Bezugszeichenliste

- 1: Brennkraftmaschine
- 2, 2a, 2b,: Turbinenvorrichtung
- 3a, 3b: Abgasanlage
- 4, 4a, 4b: Verdichtervorrichtung
- 5: Welle
- 6a, 6b, 6c, 6d: Wärmetauscher
- 7: Elektromaschine
- 8a, 8b, 8c: Abgasstrang
- 9a, 9b, 9c: Zylinder
- 10: Fahrzeug
- 11a, 11b: Diffusor
- 12a, 12b, 12c, 12d, 12e: Gasführung
- 13: Gasführung zum Ladekühler

## Patentansprüche

1. Brennkraftmaschine (1), aufweisend:
eine Turbinenvorrichtung (2) mit einem ersten Turbinenrad, welches in der Weise in einer Abgasanlage (3) der Brennkraftmaschine angeordnet ist, das es mit Abgas betreibbar ist,
eine Verdichtervorrichtung (4) mit einem ersten Verdichterrad, wobei durch die Verdichtervorrichtung (4) verdichtetes Gas, insbesondere Luft, wenigstens teilweise der Turbinenvorrichtung (2) zugeführt wird,
eine Welle (5), welche mit dem ersten Turbinenrad und dem ersten Verdichterrad gekoppelt ist, und
einen Wärmetauscher (6a, 6b, 6c, 6d), welcher mit der Abgasanlage (3) in der Weise thermisch verbunden ist, um Abwärme aus Abgas der Brennkraftmaschine (1) auf durch die Verdichtervorrichtung (4) verdichtetes Gas, insbesondere Luft, zu übertragen, welches der Turbinenvorrichtung (2) zugeführt wird,
**dadurch gekennzeichnet,**
**dass** der Wärmetauscher eine Querschnittsfläche aufweist, welche in Strömungsrichtung des verdichteten Gases in der Weise zunimmt, dass die makroskopische Strömungsgeschwindigkeit des verdichteten Gases entlang des gesamten Wärmetauschers (6a, 6b, 6c, 6d) innerhalb eines vorgegebenen Wertebereichs liegt.

2. Brennkraftmaschine (1) nach Anspruch 1, wobei das verdichtete Gas den Wärmetauscher (6a, 6b, 6c, 6d) in Bezug auf das Abgas in der Abgasanlage (3) im Gegenstromprinzip durchströmt.

3. Brennkraftmaschine (1) nach Anspruch 1 oder 2, wobei die Verdichtervorrichtung (4) des Weiteren die Brennkraftmaschine (1) mit verdichtetem Gas, insbesondere Luft, versorgt.

4. Brennkraftmaschine (1) nach einem der vorhergehenden Ansprüche, des Weiteren eine Elektromaschine (7) aufweisend, welche ebenfalls mit der Welle (5) gekoppelt ist.

5. Brennkraftmaschine (1) nach einem der vorhergehenden Ansprüche, wobei der Wärmetauscher (6a, 6b, 6c, 6d) mit einem ersten Teil der Abgasanlage (3), welcher hinsichtlich des Abgases stromabwärts der Turbineneinrichtung (2) angeordnet ist, mit einem zweiten Teil der Abgasanlage (3), welche stromaufwärts der Turbineneinrichtung (2) angeordnet ist und/oder mit wenigstens einem Abgasstrang (8a, 8b, 8c) eines Zylinders (9a, 9b, 9c) thermisch verbunden ist.

6. Brennkraftmaschine (1) nach einem der vorhergehenden Ansprüche, wobei das verdichtete Gas dem ersten Turbinenrad der Turbinenvorrichtung (2) zugeführt wird.

7. Brennkraftmaschine (1) nach einem der vorhergehenden Ansprüche, wobei die Turbinenvorrichtung (2) ein zweites Turbinenrad aufweist, welches mit der Welle (5) koppelbar ist, wobei das Abgas der Brennkraftmaschine (1) das erste Turbinenrad antreibt und das verdichtete Gas das zweite Turbinenrad antreibt.

8. Brennkraftmaschine (1) nach einem der vorhergehenden Ansprüche, wobei die Verdichtervorrichtung (4) ein zweites Verdichterrad aufweist, welches mit der Welle (5) koppelbar ist, wobei das erste Verdichterrad der Turbinenvorrichtung (4) über den Wärmetauscher (6a, 6b, 6c, 6d) verdichtetes Gas zuführt und das zweite Verdichterrad der Verbrennungskraftmaschine (1) verdichtetes Gas zuführt.

9. Fahrzeug (10) mit einer Brennkraftmaschine (1) nach einem der vorhergehenden Ansprüche.

10. Fahrzeug (10) mit einer Brennkraftmaschine (1) nach einem der Ansprüche 7 bis 8, wobei entspanntes Gas von dem zweiten Turbinenrad wenigstens einem Diffusor (11) des Fahrzeugs (10) zugeführt wird.

11. Fahrzeug (10) nach Anspruch 10, wobei der Wärmetauscher (6a, 6b, 6c, 6d) mit einem Teil einer Gasführung (12a) zwischen der zweiten Turbinenvorrichtung (2) und dem Diffusor (11) thermisch verbunden ist.

12. Fahrzeug (10) nach Anspruch 11, wobei das verdichtete Gas den Wärmetauscher (6a, 6b, 6c, 6d) in Bezug auf das entspannte Gas in der Gasführung im Gegenstromprinzip durchströmt.

13. Verfahren zum Betrieb einer Brennkraftmaschine (1) nach einem der Ansprüche 1 bis 11 unter Umwandlung von thermischer Abgasenergie in mechanische Leistung mittels eines offenen Gasturbinenprozesses, folgende Arbeitsschritte aufweisend:
Verdichten von Gas, insbesondere Luft, mittels einer Abgasturboladervorrichtung (2, 4);
Übertragen von Abwärme des Abgases der Brennkraftmaschine (1) auf das verdichtete Gas, wobei die makroskopische Strömungsgeschwindigkeit des verdichteten Gases beim Übertragen der Abwärme innerhalb eines vorgegebenen Wertebereichs liegt; und
Zuführen des erwärmten, verdichteten Gases zu der Abgasturboladervorrichtung (2, 4).

14. Verfahren nach Anspruch 13, des weiteren folgenden Arbeitsschritt aufweisend: Übertragen von Abwärme des aus der Abgasturboladervorrichtung (2, 4) austretenden entspannten Gases auf das verdichtete Gas.

15. Verfahren nach Anspruch 13 oder 14, des weiteren folgenden Arbeitsschritt aufweisend:
Umwandeln wenigstens eines Teils von durch die Abgasturboladervorrichtung (2, 4) generierter mechanischer Energie in elektrische Energie.

16. Verfahren nach Anspruch 13 oder 14, des weiteren folgenden Arbeitsschritt aufweisend:
Umwandeln von elektrischer Energie in mechanische Energie an der Abgasturboladervorrichtung (2, 4).

## Claims

1. Combustion engine (1) comprising:
a turbine device (2) with a first turbine wheel, arranged in an exhaust system (3) of the combustion engine (1) in a manner that it is operable by exhaust gas,
a compressor device (4) with a first compressor wheel, wherein gas, in particular air, compressed by the compressor device (4) is at least partially conveyed to the turbine device (2),
a shaft (5), which is coupled with the first turbine wheel and the first compressor wheel,
and a heat exchanger (6a, 6b, 6c, 6d), which is thermally connected to the exhaust system (3) in a manner that exhaust heat of exhaust gas of the combustion machine (1) is conferred to the gas, in particular air, compressed by the compressor device (4) which is conveyed to the turbine device (2),
**characterized in that**
the heat exchanger has a cross sectional area which increases with the direction of flow of the compressed gas in a manner that the macroscopical flow velocity of the compressed gas lies within a determined range of values along the entirety of the heat exchanger (6a, 6b, 6c, 6d).

2. Combustion engine (1) according to claim 1, wherein the compressed gas flows through the heat exchanger (6a, 6b, 6c, 6d) counter-currently in relation to the exhaust gas in the exhaust system (3).

3. Combustion engine (1) according to claim 1 or 2, wherein the compressor device (4) additionally supplies the combustion engine (1) with compressed gas, in particular air.

4. Combustion engine (1) according to one of the preceding claims further comprising an electric machine (7) which is also coupled to the shaft (5).

5. Combustion engine (1) according to one of the preceding claims, wherein the heat exchanger (6a, 6b, 6c, 6d) is thermally coupled to a first part of the exhaust system (3), which is arranged downstream of the turbine device (2) in relation to the exhaust gas, with a second part of the exhaust system (3), which is arranged upstream of the turbine device (2) and/or with at least one exhaust train (8a, 8b, 8c) of a cylinder (9a, 9b, 9c).

6. Combustion engine (1) according to one of the preceding claims, wherein the compressed gas is conveyed to the first turbine wheel of the turbine device (2).

7. Combustion engine (1) according to one of the preceding claims, wherein the turbine device (2) comprises a second turbine wheel, which is coupleable with the shaft (5), wherein the exhaust gas of the combustion engine (1) drives the first turbine wheel and the compressed gas drives the second turbine wheel.

8. Combustion engine (1) according to one of the preceding claims, wherein the compressor device (4) comprises a second compressor wheel, which is coupleable with the shaft (5), wherein the first compressor wheel conveys compressed gas to the turbine device (4) via the heat exchanger (6a, 6b, 6c, 6d) and the second compressor wheel conveys compressed gas to the combustion engine (1).

9. Vehicle (10) with a combustion engine (1) according to one of the preceding claims.

10. Vehicle (10) with a combustion engine (1) according to one of claims 7 or 8, wherein expended gas is conveyed to a diffusor (11) of the vehicle (10) from the second turbine wheel.

11. Vehicle (10) according to claim 10, wherein the heat exchanger (6a, 6b, 6c, 6d) is thermally coupled to gas path (12a) between the second turbine device (2) and the diffusor (11).

12. Vehicle (10) according to claim 11, wherein the compressed gas flows through the heat exchanger (6a, 6b, 6c, 6d) counter-currently in relation to the expended gas in the gas path.

13. Method for operating a combustion engine (1) according to one of claims 1 to 11 using transformation of thermal exhaust energy into mechanical power by means of an open gas turbine process comprising the following steps:
compressing of gas, in particular air, by means of an exhaust gas turbo charger device (2, 4);
conferring of exhaust heat of the exhaust gas of the combustion engine (1) to the compressed gas, wherein the macroscopical flow velocity of the compressed gas lies within a determined value range while conferring the exhaust heat; and
conveying of the warmed, compressed gas to the exhaust gas turbo charger device (2, 4).

14. Method according to claim 13 further comprising the following step: conferring of exhaust heat of the expended gas leaving the exhaust gas turbo charger device (2, 4) to the compressed gas.

15. Method according to claim 13 or 14 further comprising the following step: converting at least part of the mechanical energy generated by the exhaust gas turbo charger device (2, 4) into electrical energy.

16. Method according to claim 13 or 14, further comprising the following step: converting of electrical energy into mechanical energy at the exhaust gas turbo charger device (2, 4).

## Revendications

1. Moteur à combustion interne (1), présentant :
un dispositif de turbine (2) comprenant une première roue de turbine, laquelle est disposée dans un système d'échappement (3) du moteur à combustion interne de telle manière qu'elle peut fonctionner avec des gaz d'échappement,
un dispositif de compresseur (4) avec une première roue de compresseur, dans lequel du gaz compressé par le dispositif de compresseur (4), en particulier de l'air, est amené au moins en partie au dispositif de turbine (2),
un arbre (5), lequel est couplé à la première roue de turbine et à la première roue de compresseur, et
un échangeur de chaleur (6a, 6b, 6c, 6d), lequel est relié de manière thermique au système d'échappement (3) de manière à transférer de la chaleur perdue provenant des gaz d'échappement du moteur à combustion interne (1) sur le gaz compressé par le dispositif de compresseur (4), en particulier l'air, lequel est amené au dispositif de turbine (2),
**caractérisé en ce**
**que** l'échangeur de chaleur présente une surface de section transversale, laquelle augmente dans la direction d'écoulement du gaz compressé de telle manière que la vitesse d'écoulement macroscopique du gaz compressé le long de l'ensemble de l'échangeur de chaleur (6a, 6b, 6c, 6d) se situe dans une plage de valeurs prédéfinie.

2. Moteur à combustion interne (1) selon la revendication 1, dans lequel le gaz compressé traverse selon le principe du contre-courant l'échangeur de chaleur (6a, 6b, 6c, 6d) par rapport aux gaz d'échappement dans le système d'échappement (3).

3. Moteur à combustion interne (1) selon la revendication 1 ou 2, dans lequel le dispositif de compresseur (4) alimente par ailleurs le moteur à combustion interne (1) en gaz compressé, en particulier en air.

4. Moteur à combustion interne (1) selon l'une quelconque des revendications précédentes, présentant par ailleurs un moteur électrique (7), lequel est couplé également à l'arbre (5).

5. Moteur à combustion interne (1) selon l'une quelconque des revendications précédentes, dans lequel l'échangeur de chaleur (6a, 6b, 6c, 6d) est relié de manière thermique à une première partie du système d'échappement (3), laquelle est disposée, eu égard aux gaz d'échappement, en aval du système de turbine (2), à une deuxième partie du système d'échappement (3), laquelle est disposée en amont du système de turbine (2) et/ou à au moins une colonne de gaz d'échappement (8a, 8b, 8c) d'un cylindre (9a, 9b, 9c).

6. Moteur à combustion interne (1) selon l'une quelconque des revendications précédentes, dans lequel le gaz compressé est amené à la première roue de turbine du dispositif de turbine (2).

7. Moteur à combustion interne (1) selon l'une quelconque des revendications précédentes, dans lequel le dispositif de turbine (2) présente une deuxième roue de turbine, laquelle peut être couplée à l'arbre (5), dans lequel les gaz d'échappement du moteur à combustion interne (1) entraînent la première roue de turbine et le gaz compressé entraîne la deuxième roue de turbine.

8. Moteur à combustion interne (1) selon l'une quelconque des revendications précédentes, dans lequel le dispositif de compresseur (4) présente une deuxième roue de compresseur, laquelle peut être couplée à l'arbre (5), dans lequel la première roue de compresseur amène au dispositif de turbine (4) du gaz compressé par l'intermédiaire de l'échangeur de chaleur (6a, 6b, 6c, 6d) et la deuxième roue de compresseur amène au moteur à combustion interne (1) du gaz compressé.

9. Véhicule (10) avec un moteur à combustion interne (1) selon l'une quelconque des revendications précédentes.

10. Véhicule (10) avec un moteur à combustion interne (1) selon l'une quelconque des revendications 7 à 8, dans lequel du gaz détendu est amené par la deuxième roue de turbine à au moins un diffuseur (11) du véhicule (10).

11. Véhicule (10) selon la revendication 10, dans lequel l'échangeur de chaleur (6a, 6b, 6c, 6d) est relié de manière thermique à une partie d'un système de guidage de gaz (12a) entre le deuxième dispositif de turbine (2) et le diffuseur (11).

12. Véhicule (10) selon la revendication 11, dans lequel le gaz compressé traverse selon le principe du contre-courant l'échangeur de chaleur (6a, 6b, 6c, 6d) par rapport au gaz détendu dans le système de guidage de gaz.

13. Procédé servant à faire fonctionner un moteur à combustion interne (1) selon l'une quelconque des revendications 1 à 11 en transformant de l'énergie de gaz d'échappement thermique en puissance mécanique au moyen d'un processus de turbine à gaz ouvert, présentant des étapes de travail suivantes de :
compression de gaz, en particulier d'air, au moyen d'un dispositif de turbocompresseur (2, 4) ;
transfert de chaleur perdue des gaz d'échappement du moteur à combustion interne (1) sur le gaz compressé, dans lequel la vitesse d'écoulement macroscopique du gaz compressé se situe lors du transfert de chaleur perdue dans une plage de valeurs prédéfinie ; et
amenée du gaz réchauffé compressé vers le dispositif de turbocompresseur (2, 4).

14. Procédé selon la revendication 13, présentant par ailleurs l'étape de travail suivante de :
transfert de chaleur perdue du gaz détendu sortant du dispositif de turbocompresseur (2, 4) sur le gaz compressé.

15. Procédé selon la revendication 13 ou 14, présentant par ailleurs l'étape de travail suivante :
transformation d'au moins une partie de l'énergie mécanique générée par le dispositif de turbocompresseur (2, 4) en énergie électrique.

16. Procédé selon la revendication 13 ou 14, présentant par ailleurs une étape de travail suivante de :
transformation d'énergie électrique en énergie mécanique au niveau du dispositif de turbocompresseur (2, 4).
